# EUROPEAN PATENT SPECIFICATION

(11) **EP 2 747 167 B1**
(45) Date of publication and mention of the grant of the patent: **24.05.2017**
(21) Application number: 12836801.6
(22) Date of filing: 28.09.2012
(51) Int. Cl.: H01M 2/02, H01M 2/06, H01M 2/10, H01M 10/04

(54) **BATTERY AND METHOD FOR MANUFACTURING SAME**
BATTERIE UND VERFAHREN ZU IHRER HERSTELLUNG
BATTERIE ET SON PROCÉDÉ DE FABRICATION

(30) Priority: 29.09.2011 JP 2011214399
(43) Date of publication of application: 25.06.2014
(73) Proprietor: Automotive Energy Supply Corporation, Zama-shi, Kanagawa 252-0012 (JP)
(72) Inventor: TANJO, Yuji, Zama-shi Kanagawa 252-0012 (JP); SAKAGUCHI, Shinichiro, Zama-shi Kanagawa 252-0012 (JP)
(74) Representative: Hoefer & Partner Patentanwälte mbB
(86) International application number: PCT/JP2012/075144
(87) International publication number: WO 2013/047778

(56) References cited:
- JP-A- H07 302 616
- JP-A- 2000 277 062
- JP-A- 2007 018 917
- JP-A- 2007 311 323
- JP-A- 2010 135 111
- JP-A- 2010 277 925
- JP-A- 2012 174 590
- JP-U- H0 379 162

## Description

### Technical Field:

The present invention relates to a battery and a method of manufacturing the same.

### Background Art:

There are batteries of a type that comprises an electrode stacked body including a plurality of electrodes and separators each being put between adjacent two of the separators, and a pair of laminate films that constitute a package to hermetically put therein the electrode stacked body. In such batteries, when the electrode stacked body is forced to move in the package of the laminate films due to a shock or the like, malfunction of the battery tends to occur. Thus, it is desirable to suppress undesirable movement of the electrode stacked body in the laminate film package.

In view of the above, for suppressing undesirable movement of the electrode stacked body in the laminate film package, various techniques have been proposed by Patent Documents 1 to 4.

In the technique disclosed by Patent Documents 1 and 2, at least one of the separators is shaped flat and has a size larger than the other separators and electrodes that constitute the electrode stacked body, and a part of the flat and larger separator projects outward from a side of the electrode stacked body and the part of the flat and larger separator that projects outward from the electrode stacked body is put between respective peripheral portions of the paired laminate films. That is, between the peripheral portions of the paired laminate films, there is inserted the part (or projected part) of the flat and larger separator, and at the time when the peripheral portions of the paired laminate films are joined via heat joining or the like, the projected part of the flat and larger separator, which is put between the peripheral portions of the paired laminate films, is also joined to the peripheral portions, so that the electrode stacked body is stably set in the laminate film package.

In the technique disclosed by Patent Document 3, the electrodes and separators are alternately stacked on one laminate film, and each time an electrode or separator is stacked, a tab film bonded to the electrode or separator by itself is joined to the laminate film via heat joining or the like. Finally, another laminate film is put on the stacked body, and peripheral portions of the two laminate films are joined via heat joining or the like. Also by this technique, the tab films and separators that are bonded to the electrodes are respectively joined to the paired laminate films, and thus, undesirable movement of the electrode stacked body in the passage is suppressed.

In Patent Document 4, there is disclosed a technique in which a through bore is formed in a center area (when viewed planarly) of an electrode stacked body that includes a plurality of electrode layers and a plurality of separator layers, and in which the electrode stacked body is wrapped up by a pair of laminate films, and the paired laminate films are in contact with each other through the through bore and joined via heat joining or the like.

In the technique of Patent Documents 1 and 2, since the projected portion of the separator is fixed due to joining between the peripheral portions of the laminate films placed around the projected portion, reliability of suppressing the undesirable movement of the electrode stacked body in the package is increased. However, if the separator layer 22 that requires a heat resisting property is not produced by a suitable material, it tends to occur that the separator layer 22 fails to make a desirable joining with a heat fusible resin that forms inner surfaces of the laminate films 20. In this case, due to presence of the projected part of the separator between the peripheral portions of the paired laminate films, a bonding power appearing between the peripheral portions of the laminate films is lowered thereby lowering the sealing performance of the joined portion between the peripheral portions, which is an undesired matter.

In Patent Document 3, there is no disclosure nor teaching about a case where a plurality of separators are present. Assuming a case where a plurality of separators are present, the space hermetically sealed by the laminate films has to receive therein a plurality of joined portions between the separators and the laminate films. Furthermore, in such case, for securing a joining portion for each separator to laminate films, the shape of the separators is complicated. Accordingly, in case of Patent Document 2, assuming or considering usage of a plurality of separators is not realistic.

Furthermore, when, like in case of Patent Document 3, the center area (when viewed planarly) of the electrode stacked body has a through bore formed therethrough, there is a possibility of a short circuit between the electrode layer and a metal layer of the laminate films. One of reasons of this short circuit is that edge portions of the inner surface of the through bore formed in the electrode layers are led into the interior of the through bore and brought into contact with inner surface of the laminate films with which the electrode layers are heat joined, so that the edge portions of the inner surface of the through bore damage the inner surface of the laminate films. In this case, the electrode layers and the metal layers of the laminate films tend to contact to each other at the damaged portion of the inner surface of the laminate films.

### Prior art Documents:

### Patent Documents:

Patent Document 1: Japanese Laid-open Patent Application (tokkai) 2007-311323
Patent Document 2: Japanese Laid-open Patent Application (tokkai) 2000-277062
Patent Document 3: Japanese Laid-open Patent Application (tokkai) 2010-277925
Patent Document 4: Japanese Laid-open Utility Model Application (jikkaihei) 03-079162

### Summary of Invention:

Accordingly, an object of the present invention is to provide a battery and a method of manufacturing the same, in which the battery employs a plurality of separators and effectively suppresses undesirable movement of an electrode stacked body in a package while preventing lowering of a sealing performance of a film-made cover member (or exterior body films).

Another object of the present invention is to provide a battery and a method of manufacturing the same, in which undesirable movement and displacement of the electrode stacked body, which includes positive electrode layers, negative electrode layers and separator layers, are suppressed and at the same time, undesirable electrical short-circuit between metal layers and the electrode stacked body in the film-made cover member is suppressed.

A battery of the present invention comprises an electrode stacked body that includes a plurality of electrodes and a plurality of separators that are alternately stacked; and a film-made cover member that, by joining mutually overlapped peripheral portions of films, constitute a package for hermetically receiving therein the electrode stacked body, which is characterized in that the plurality of separators include separators that are flat in shape and larger in size and separators that are flat in shape and smaller in size, and the separators that are flat in shape and larger in size project outward from a side of the electrode stacked body and joined to the films of the film-made cover member at a position inside the mutually joined peripheral portions of the film-made cover member.

In the construction of the battery, since the separators and the film-made cover member are joined, undesirable movement of the electrode stacked body in the package is suppressed, and since the flat and larger separators are joined to the film-made cover member at a position inside the mutually joined peripheral portions of the film-made cover member, the mutually joined peripheral portions of the film-made cover member have no separator therebetween and thus, lowering of sealing performance can be suppressed. Furthermore, since, although the battery has a plurality of separators, only the flat and larger separators are joined to the film-made cover member, it is possible to reduce the energy needed to carry out the joining and it is possible to reduce damages which would be applied to the joined peripheral portions of the film-made cover member.

Another battery of the present invention comprises an electrode stacked body including separator layers and positive and negative electrode layers that are stacked while putting therebetween the separator layers and a package that wraps up the electrode stacked body, which is characterized in that the separator layers have, at a part of peripheral portions of the separator layers, an uncovered portion that is not covered by the positive and negative electrode layers, the uncovered portion is formed with a through bore, the package includes a pair of laminate films or a turned back laminate film that includes at least a fusible resin and a metal layer and the laminate films are joined via heat joining through the through hole formed at the uncovered portion of the separator layers.

In accordance with this battery, since the uncovered portion of the separator layers is formed with the through bore and the laminate films are joined to each other through the through bore, undesirable movement of the electrode stacked body in the package is suppressed. Furthermore, since the through bore has no electrodes placed therein, possibility of electrical short-circuit between the electrode layers and the metal layers provided by the laminate films is very small. Furthermore, since the through bore is formed in only the separator layers and the portion where the through bore is provided is small in thickness as compared with a major portion of the electrode stacked body and the separator layers are made of a material that is softer than the electrode layers, possibility of damages applied to the heat fusible resin by the edge portion of the through bore is reduced.

Furthermore, after producing the electrode stacked body, the through bore can be produced at the uncovered portion of the separator layers. Furthermore, even in case where a plurality of separator layers are present at the uncovered portion, the through bore can be made in the plural separator layers at once, and thus the work efficiency is increased and thus manufacturing cost can be reduced.

### Brief Description of Drawings:

Fig. 1(a) is a schematically illustrated plan view of a battery of a first embodiment of the present invention with one laminate film removed, and Fig. 1(b) is a sectional view taken along the line X-X of Fig. 1(a);
Figs. 2(a) and 2(b) are schematically illustrated sectional views depicting a manufacturing process of the battery of Figs. 1(a) and 1(b);
Fig. 3(a) is a schematically illustrated plan view of an electrode stacked body of a battery of a second embodiment of the present invention, Fig. 3(b) is a sectional view taken along the line Y-Y of Fig. 3(a), and Fig. 3(c) is a schematic view of a pair of intermediate electrode layers and an electrode, which is an enlarged sectional view taken along the line Y-Y of Fig. 3(a);
Fig. 4 is a schematic view of a battery including electrode stacked bodies each being shown by Figs. 3(a) and 3(b), which is a sectional view taken along the line Y-Y of Fig. 3(a);

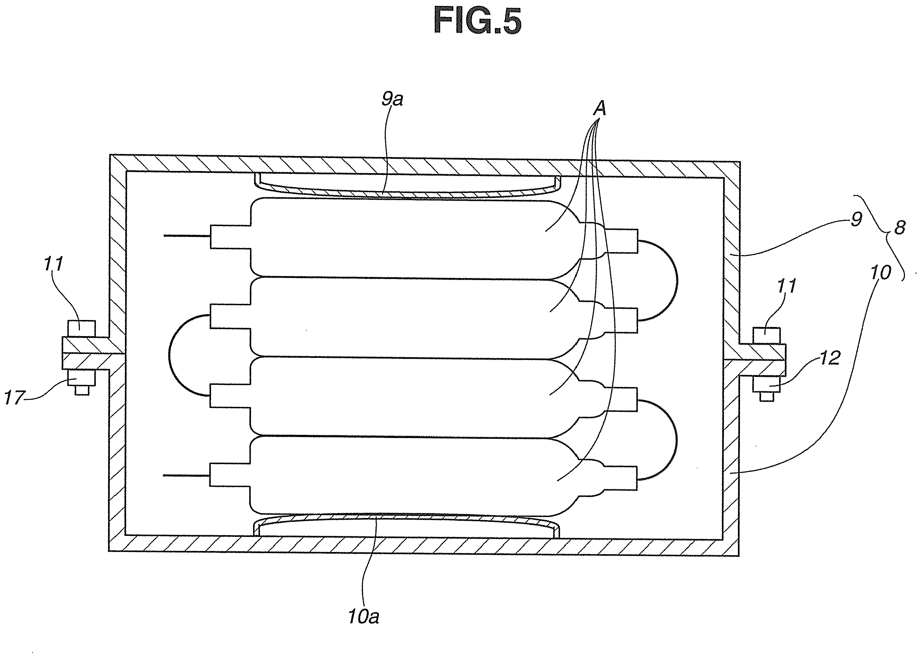

Fig. 5 is a sectional view of a battery unit of a third embodiment of the present invention;
Fig. 6 is a schematically illustrated plan view of a battery of a fourth embodiment of the present invention;
Fig. 7 is an enlarged sectional view of an essential part of the battery of Fig. 6, which is taken along the line A-A of Fig. 6;
Fig. 8(a) is an enlarged sectional view of an essential part of an electrode stacked body in a process of producing the battery of Fig. 6, and Fig. 8(b) is an enlarged sectional view of the essential part in a process of forming a through bore;
Fig. 9 is a schematically illustrated plan view of a battery of a fifth embodiment of the present invention;
Fig. 10 is a schematically illustrated plan view of a battery of a sixth embodiment of the present invention;
Fig. 11 is a schematically illustrated plan view of a battery of a seventh embodiment of the present invention;
Fig. 12 is a schematically illustrated plan view of a battery of an eighth embodiment of the present invention;
Fig. 13 is a schematically illustrated plan view of a battery of a ninth embodiment of the present invention;
Fig. 14 is a schematically illustrated plan view of a battery of a tenth embodiment of the present invention;
Fig. 15(a) is a schematically illustrated plan view of a battery of an eleventh embodiment of the present invention; and Figs. 15(b) and 15(c) are plan and side views of two types of battery holders for holding the battery; and
Fig. 16 shows a perspective view of an essential part of a battery module that includes the battery of Fig. 15 and the battery holders and a sectional view of the battery module.

### EMBODIMENTS OF THE INVENTION:

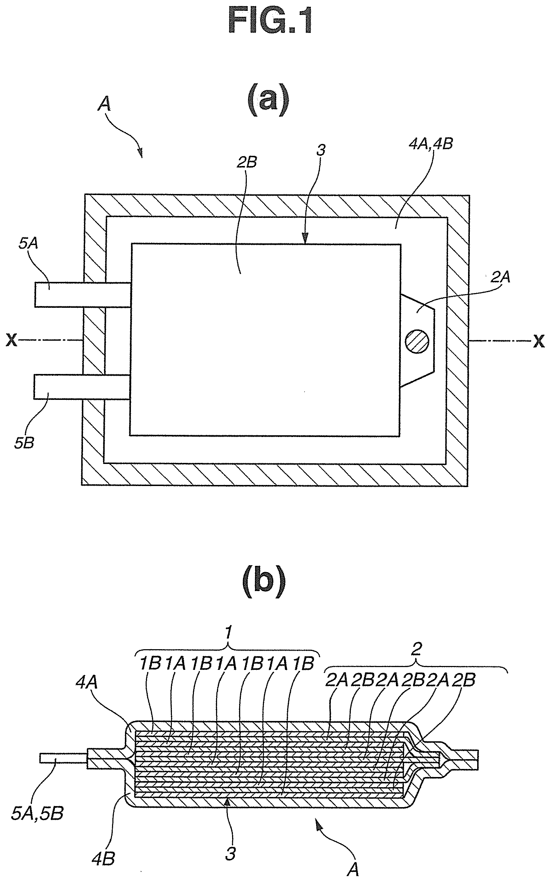

In the following, embodiments of the present invention will be described with reference to the accompanying drawings. In Figs. 1(a) and 1(b), there is schematically shown a view of a battery of a first embodiment of the present invention. Fig. 1(a) shows a condition wherein one of two laminate films is removed for clarification of the drawing.

A battery A of this embodiment is a lithium ion secondary battery which is one example. The battery has such a construction that an electrode stacked body 3, which includes a plurality of electrodes 1 and a plurality of separators 2 which are alternately stacked on one another, is hermetically received in a package that is made of a pair of mutually joined films for a film-made cover member (viz., exterior body films, laminate films). More specifically, positive electrodes 1A and negative electrodes 1B are alternately stacked on one another keeping separators 2 put therebetween to constitute an electrode stacked body 3. As a material of the positive electrodes 1A, lithium-manganese oxide, lithium-nickel oxide or the like can be used. As a material of the negative electrodes 1B, graphite, amorphous carbon or the like can be used. As a material of the separators 2, a polyolefine sheet made of polypropylene or the like can be used.

The separators 2 include two types of separators, one being a larger flat type 2A and the other being a smaller flat type 2B. Specifically, as is shown in Fig. 1(b), the larger flat separators 2A and the smaller flat separators 2B are alternately stacked on one another in a direction in which the separators 2A and 2B are stacked. In this embodiment, each smaller flat separator 2B has a size larger than each of the electrodes 1A and 1B, and each larger flat separator 2A is longer in a longitudinal direction (viz., in right-left direction in Fig. 1) than each of the electrodes 1A and 1B and the smaller flat separators 2B. Accordingly, the larger flat separators 2A have portions (projected portions) that project or protrude outward from a side of the electrode stacked body 3.

One side (viz., front side in Fig. 1(a)) of the electrode stacked body 3 is covered with a laminate film 4A, and the other side (viz., back side in Fig. 1(a)) of the body 3 is covered with another laminate film 4B. These laminate films 4A and 4B have respective peripheral portions put on each other and joined with each other via heat joining or the like (the joined portion is hatched in Fig. 1(a)). As is mentioned hereinabove, a package for receiving the electrode stacked body 3 is produced by the laminate films 4A and 4B whose peripheral portions are joined. Although not shown in the drawings, electrolyte is sealed in the package. Each of the laminate films 4A and 4B includes a polyolefine resin layer such as polypropylene or the like, a metal layer and a protective layer, which are laminated in a direction from the joined part toward the outside.

A lead-out electrode 5A connected to the positive electrodes 1A and a lead-out electrode 5B connected to the negative electrodes 1B are drawn out to the outside of the package through the joined peripheral portions of the laminate films 4A and 4B.

In this embodiment, within the package, that is, at a position inside the joined peripheral portions of the laminate films 4A and 4B, the portion (projected portion) of the flat larger separators 2A, which is projected outward from the side of the electrode stacked body 3, is joined to the laminate films 4A and 4B by way of a ultrasonic welding method or the like (the joined portion is hatched in Fig. 1(a)).

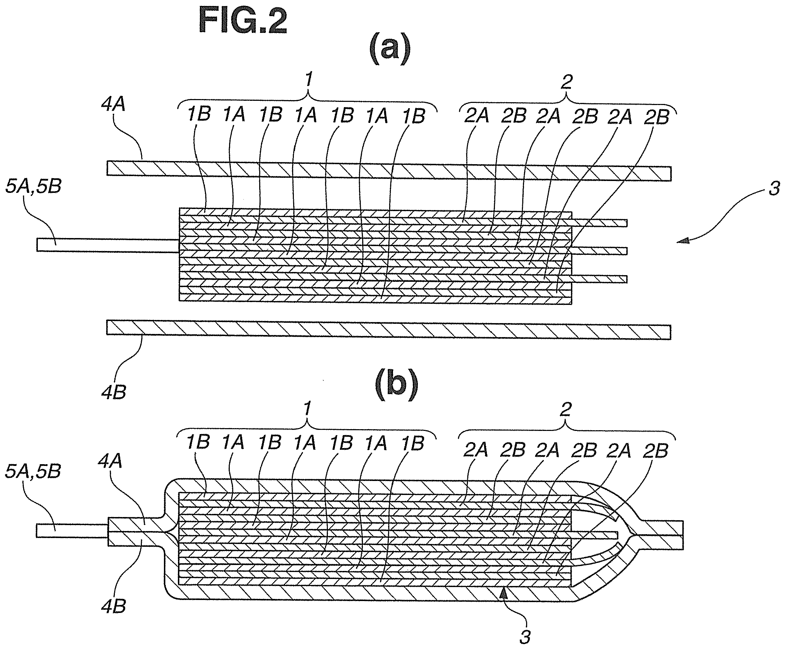

In the following, a method of producing the battery A of this embodiment will be described with reference to Figs. 2(a) and 2(b). First, as is seen from Fig. 2(a), a plurality of electrodes 1 and separators 2 are stacked on one another to produce an electrode stacked body 3. More specifically, as is mentioned hereinabove, the negative electrode 1B, the larger flat separator 2A, the positive electrode 1A and the smaller flat separator 2B are alternately put on one another in this order and the stacking work is repeated. Then, the lead-out electrode 5B is connected to the negative electrodes 1B and the lead-out electrode 5A is connected to the positive electrodes 1A. As is seen from Fig. 2(b), a laminate film 4A is placed at one side of the electrode stacked body 3 and another laminate film 4B is placed at the other side of the body 3, and then, the electrode stacked body 3 is wrapped up by the laminate films 4A and 4B. Then, respective peripheral portions of the laminate films 4A and 4B are intimately put on each other except one side through which electrolyte is poured thereinto, and then the peripheral portions are joined to each other via heat joining or the like. It is to be noted that the side through which the electrolyte is poured thereinto is a side where the larger flat separators 2A are not projected from the electrode stacked body 3. After completion of pouring of the electrolyte, joining of the remaining side is made via heat joining or the like.

Then, the laminate films 4A and 4B are brought into contact with the projected portions of the larger flat separators 2A which are placed inside the peripheral portions of the laminate films 4A and 4B when viewed planarly and projected from the side of the electrode stacked body 3, and then the laminate films 4A and 4B are joined to the projected portions by way of ultrasonic welding method. With this procedure, the laminate film 4A, the larger flat separator 2A that forms an outermost layer, the larger flat separator 2A that takes an intermediate position, the larger flat separator 2A that forms the other outermost layer and the laminate film 4B are stacked and joined. With this process, the battery A shown in Figs. 1(a) and 1(b) is produced.

In this battery A, since the larger flat separators 2A and the laminate films 4A and 4B are joined within the package constructed by the laminate films 4A and 4B, undesirable movement of the electrode stacked body 3 is suppressed and since the separators are not present at the joined peripheral portions of the laminate films 4A and 4B, lowering of joining reliability of the peripheral portions of the laminate films 4A and 4B can be suppressed. Furthermore, even though the battery is of a type that has a plurality of separators, joining only a part of the plurality of separators, which are the larger flat separators, to the laminate films 4A and 4B can bring about reduction of energy needed for the joining as well as reduction of influence applied to the joined peripheral portions of the laminate films 4A and 4B.

In this method of producing the battery A, the joining between the peripheral portions of the laminate films 4A and 4B is made prior to joining of the larger flat separators 2A to the laminate films 4A and 4B, and thus, heat and vibration produced at the time when the separators 2A and the laminate films 4A and 4B are joined don't affect the joining between the peripheral portions of the laminate films 4A and 4B, so that a higher sealing performance is secured.

When, in the electrode stacked body 3, the larger flat separators 2A and the smaller flat separators 2B are alternately stacked in the stacking direction, every other separator 2 is joined to the laminate films 4A and 4B, and thus, suppression of the undesirable movement of the electrode stacked body 3 in the package is effectively made. If desirable, besides every other one, every two or three other one in the larger flat separators 2A may be joined to the laminate films 4A and 4B. The number of the larger flat separators 2A to be joined to the laminate films 4A and 4B may be one or more than one. If, in case of two, the outermost two of the larger flat separators 2A are joined, a space defined between the two larger flat separators 2A joined to the laminate films 4A and 4B can put therein all of the other electrodes 1 and separators 2, and thus, movement suppression to the electrode stacked body 3 in the package is made effective.

Portions of the larger flat separators 2A that are joined to the laminate films 4A and 4B may be placed everywhere except the joined peripheral portions of the laminate films 4A and 4B. If, as is seen from Fig. 1(a), the portions of the larger flat separators 2A that are joined to the laminate films 4A and 4B are placed at a position opposite to the lead-out electrodes 5A and 5B with respect to the electrode stacked body, movement suppression to the electrode stacked body 3 in the package in the same direction is effectively made.

Joining the larger flat separators 2A to the laminate films 4A and 4B may be made by any kind methods (for example, ultrasonic welding method, spot welding or the like), and it is preferable to use a method, such as the ultrasonic welding method or the like, that does not accompany heating. This is because the joining between the peripheral portions of the laminate films 4A and 4B is made very often via heat joining, in the embodiment, after joining between the peripheral portions of the laminate films 4A and 4B, joining between the larger flat separators 2A and the laminate films 4A and 4B is carried out. That is, if, due to usage of the heat joining, joining between the larger flat separators 2A and the laminate films 4A and 4B generates heat, the heat thus generated would affect the previously joined portions (portions applied with heat joining) of the peripheral portions of the laminate films 4A and 4B, which brings about a possibility of deteriorating the joining strength.

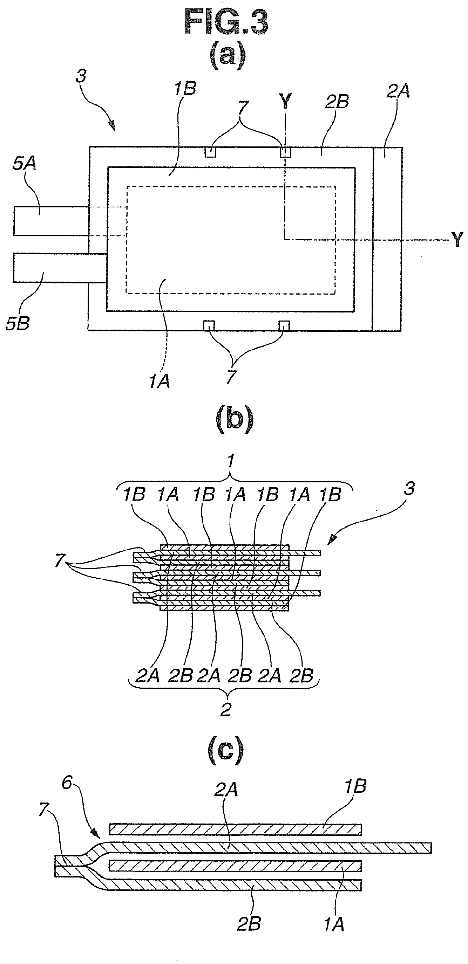

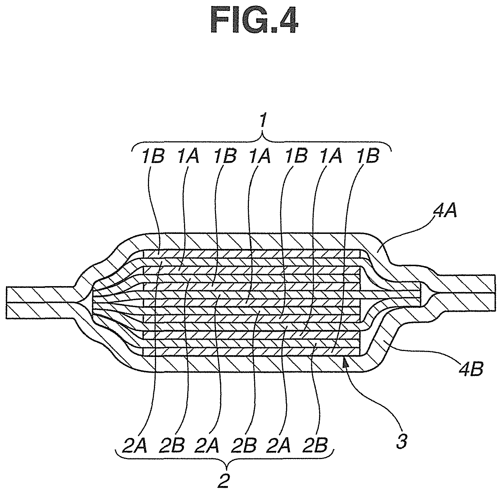

In the following, a second embodiment of the present invention will be described. Portions that are in common with those of the first embodiment will be denoted by the same numerals and detailed explanation of the portions will be omitted. In this second embodiment, as is seen from Figs. 3(a) to 3(c), an intermediate electrode stacked body 6 is provided, which comprises two adjacent separators 2 that are constructed so that at least one sides are not joined and the other sides are previously joined and an electrode of one pole (for example, the positive electrode 1A) that is put between the two adjacent separators 2. By the mutual stacking between the intermediate electrode stacked body 6 and a second pole (for example, the negative electrode 1B), an electrode stacked body 3 is produced. As is seen from Fig. 4, like in the first embodiment, first, the peripheral portions of the laminate films 4A and 4B are joined to each other with the electrode stacked body 3 kept put between the laminate films 4A and 4B, and thereafter, the larger flat separators 2A in the electrode stacked body 3 are joined to the laminate films 4A and 4B.

More specifically, in this embodiment, the larger flat separators 2A and the smaller flat separators 2B are so joined by heat joining at four joining points 7 that include two joining points provided in one side perpendicular to a side where the lead-out electrodes 5A and 5B are positioned and two joining points provided in the other side perpendicular to the side where the lead-out electrodes 5A and 5B are positioned. With such joining points, the two separators 2A and 2B are joined to constitute a bag-shaped construction. And, between the two separators 2A and 2B that are joined to constitute the bag-shaped construction, there is disposed the positive electrode 1A. With this arrangement, the intermediate electrode stacked body 6 (see Fig. 3(c)) is provided. Furthermore, as is seen from Figs. 3(a) and 3(b), a plurality of intermediate electrode stacked bodies 6 and a plurality of negative electrodes 1B are alternately stacked on one another to constitute the electrode stacked body 3. Thereafter, as is seen from Fig. 4, joining of the peripheral portions of the laminate films 4A and 4B and joining between the larger flat separators 2A and the laminate films 4A and 4B are carried out in the same manner as in the first embodiment.

In this second embodiment, in addition to the effects expected from the first embodiment, the following effect is obtained. That is, when the electrode stacked body 3 is applied with a force, the joining between the separators 2A and the laminate films 4A and 4B forces the separators 2A to be pulled and the separators 2B joined to the separators 2A to be also pulled, which is effective to suppress the undesirable movement of the electrode stacked body 3 in the package.

A third embodiment of the present invention will be described in the following. In this embodiment, a plurality of batteries A each being the same as that of the above-mentioned first or second embodiment are stacked and put in a case 8 to produce a battery unit. The case 8 of this embodiment comprises upper and lower cases 9 and 10 that are respectively provided with pressing portions 9a and 10a to resiliently press the stacked batteries A. The upper and lower cases 9 and 10 are connected to each other through connecting members (for example, bolts 11 and nuts 12). Accordingly, in this embodiment, each of the batteries A is held while being pressed. The pressing force serves as a force for suppressing undesirable movement of the electrode stacked body 3 in the package of each battery A. Accordingly, the effect of suppressing or preventing the movement of the electrode stacked body 3 is further increased.

In the above-mentioned first and second embodiments, explanation is directed to the package of the type that is produced by joining two laminate films. However, if desired, a package of another type may be used in which one laminate film is bent at one side and peripheral portions of the bent film are entirely joined. The type of the battery is not limited to the lithium ion secondary battery so long as the passage is made of a film or films.

In the following, a fourth embodiment of the present invention will be described.

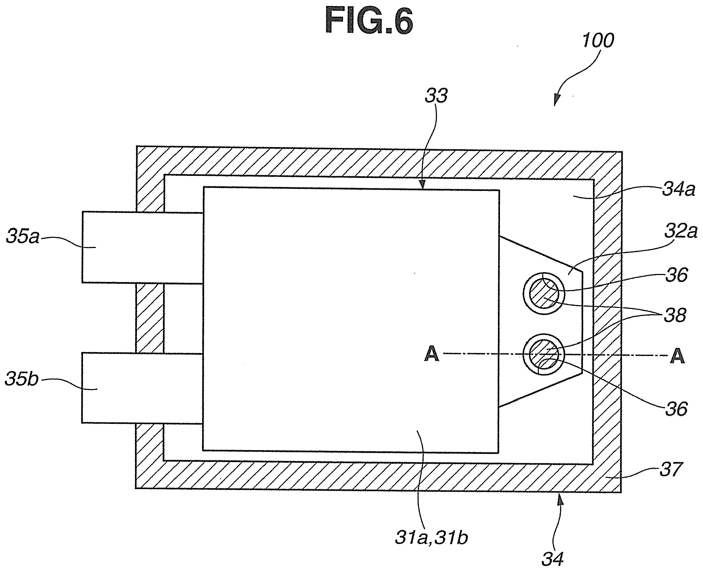

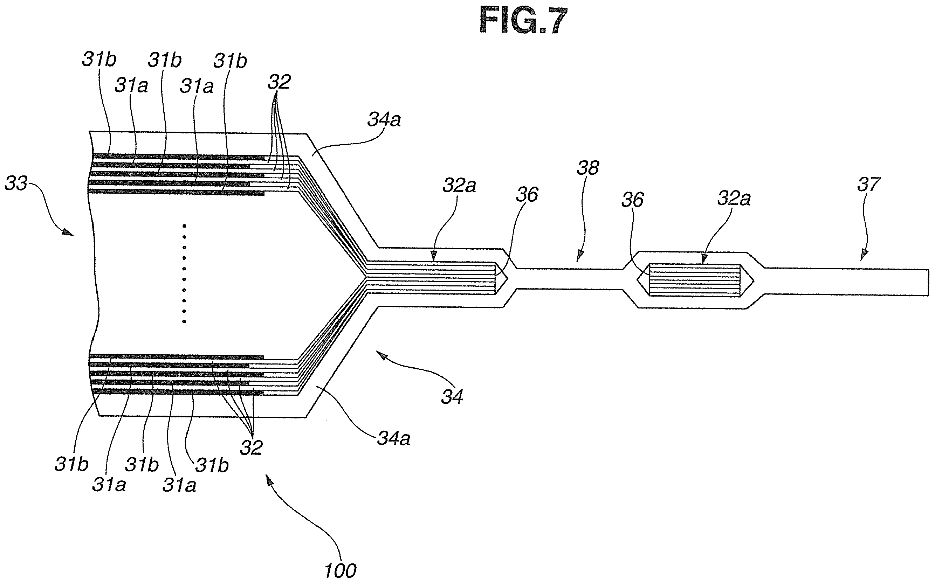

Fig. 6 shows a schematically illustrated plan view of a battery 100 of the fourth embodiment and Fig. 7 shows an enlarged sectional view taken along the line A-A of Fig. 7. In the drawings used for explaining the battery 100 of this fourth embodiment, members such as the electrode stacked body and the like in the film-made cover member (or exterior body films) are clearly illustrated and the mutually joined portions of the laminate films are clearly illustrated with the aid of hatching for easy understanding of each drawing.

In the battery 100 of this embodiment, an electrode stacked body 33, which is constructed by alternately stacking a plurality of positive electrode layers 31a, a plurality of negative electrode layers 31b and a plurality of separator layers 32 each being put between the corresponding positive and negative electrode layers, is wrapped up by a film-made cover member (exterior body films) 34 that includes a pair of laminate films 34a. A plurality of positive electrode layers 31a of the electrode stacked body 33 are connected to a positive terminal 35a and a plurality of negative electrode layers 31b are connected to a negative terminal 35b.

As a material of the separator layers 32, a polyolefine-based resin, such as polyethylene, polypropylene or the like can be used. Furthermore, a film that is made of a polyester-based resin such as polyethylene phthalate or the like or a polyamide-based resin and made porous through a film drawing process and a non-woven fabric made of the above-mentioned resin materials can be used as the separator layers 32.

Furthermore, a stuff produced by attaching inorganic fine powder of silica, alumina or the like to a surface of the above-mentioned film and non-woven fabric and a stuff produced by dispersing inorganic fine power of silica, alumina or the like into the above-mentioned film and non-woven fabric are usable as the separator layers 32.

As will be described hereinafter, in this embodiment, in order to fix the separator layers 32 to the film-made cover member (or exterior body films) 34 made of the laminate films 34a, the laminate films 34a are joined to each other via through bores 36, and thus, there is no need of considering a desirable combination in a heat fusibility between the material of the laminate films 34a which are thermal bonding resin (or heat fusible resin) and the material of the separator layers 32.

As the laminate films 34a that constitute the film-made cover member 34, a metal layer, such as aluminum layer or the like, is usable, in which one surface of the metal layer is applied with a polyester-based resin, the other surface of the same is applied with a polyolefine-based resin, such as polyethylene, polypropylene or the like and the latter layer is of a thermal bonding resin.

In this embodiment, the separator layers 32 have at a part of outer surface thereof a non-covered portion 32a that is not covered with the positive and negative electrode layers 31a and 31b. More specifically, as is seen from Fig. 6, the positive and negative electrode layers 31a and 31b of this embodiment are rectangular in shape, and the non-covered portion 32a of the separator layers 32 is a projected portion that protrudes outward from a rectangular shape that the positive and negative electrode layers 31a and 31b have. The non-covered portion 32a is formed with the through bores 36. Since the non-cover portion 32a that is not covered with the positive and negative electrode layers 31a and 31b is formed with the through bores 36, the laminate films 34a that constitute the film-made cover member 34 are directly contact to each other through the through bores 36. The laminate films 34a are joined to each other at an outward extending portion 37 placed outside the electrode stacked body 33, so that a bag-shaped film-made cover member 34 is constructed.

From one side of the outward extending portion 37 of the film-made cover member 34, there are led the positive and negative terminals 35a and 35b through the heat joined portions. The positive and negative terminals 35a and 35b are heat joined to the laminate films 34a through a metal fusible resin (not shown) thereby to fix the positive and negative terminals 35a and 35b to the film-made cover member 34. The laminate films 34a are heat joined at mutually contacting portions thereof through the through bore 36 in addition to the outward extending portion 37. This heat joined portion will be referred to as "heat-joined portion 38 for fixing separator layers" for convenience of explanation. Since, as is mentioned hereinabove, the laminate films 34a are joined to each other in the through bores 36, a planar movement of the separator layers 32 is permitted only in a range of the play appearing between the through bores 36 and the "heat joined portion 38 for fixing separator layers", so that the separator layers are substantially fixed. That is, due to provision of this "heat joined portion 38 for fixing separator layers", undesirable movement and displacement of the electrode stacked body 33 in the film-made cover member 34 is substantially stopped.

Particularly in this embodiment, the through bores 36 and the "heat joined portion 38 for fixing separator layers" are placed at a side that is opposite to a side (left side of fig. 6) where the positive and negative terminals 35a and 35b project outward from the electrode stacked body 33. That is, the positive and negative terminals 35a and 35b respectively fixed to the positive and negative electrode layers 31a and 31b are tightly put or sandwiched between the paired laminate films 34a, so that a portion that contributes to the fixing of the electrode stacked body 33 and another portion that contributes the fixing of the electrode stacked body 33 by both the above-mentioned through bores 36 and "heat joined portion 38 for fixing separator layers" are not on the same side in a planar view but on opposed sides respectively. This means that electrode stacked body 33 is fixed at both sides, and thus, undesirable movement and displacement of the electrode stacked body 33, which would be induced when a force is applied thereto in a direction in which the positive and negative terminals 35a and 35b extend, are suppressed and thus, more effective suppression is expected.

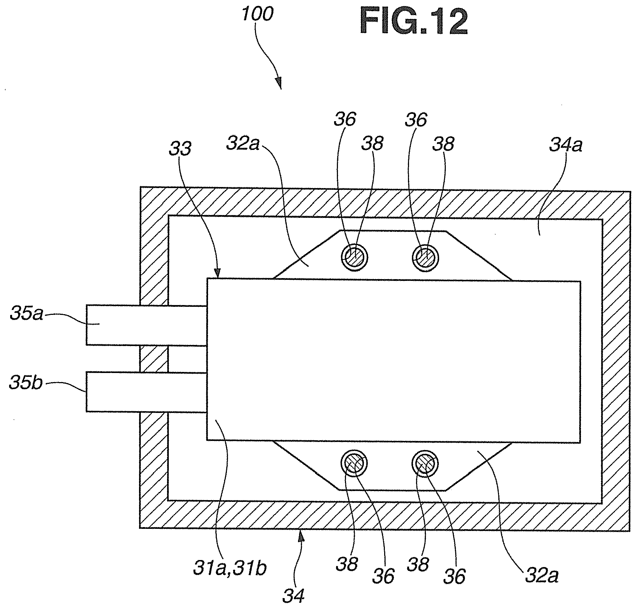

As will be described hereinafter with the aid of Fig. 12, even in case where the through bores 36 and the "heat joined portion 38 for fixing separator layers" are plural in number and some of the through bores 36 and the remaining of the through bores 38 are placed at opposed sides of the electrode stacked body 33, undesired movement and displacement of the electrode stacked body 33 are effectively suppressed.

Furthermore, in the present embodiment, the through bores 36 and the "heat joined portion 38 for fixing separator layers" are respectively arranged in a direction perpendicular to a direction in which the positive and negative terminals 35a and 35b extend. Accordingly, even when the positive and negative terminals 35a and 35b are applied with a tensile or compression force, the plural fixing portions (heat joined portion 38 for fixing separator layers) arranged in the direction perpendicular to a direction in which the force is applied function to suppress undesirable movement and displacement of the electrode stacked body 33.

Furthermore, as is seen from Fig. 7, in this embodiment, bores used for fixing the electrode stacked body 33 are formed in the non-covered portion 32a of the separator layers 32 that is placed in a range outside of the electrodes 31a and 31b, and thus, there is no electrode that has a possibility of making an electrical short-circuit and thus undesirable short circuit with the laminate films 34a is suppressed.

That is, since the laminate films 34a are heat joined to each other through the through bores 36 formed in the non-covered portion 32a of the separator layers 32, suppression of undesirable movement and displacement of the separator layers 32 in a planar direction is obtained from an increased combination between the material of the laminate film heat joined layers and the material of the separator layers 32. Furthermore, since the through bores 36 where the laminate films 34a are heat joined to each other have no electrodes and the through bores 36 are arranged between the electrodes through the insulating separator layers 32, possibility of inducing an electrical short circuit can be reduced.

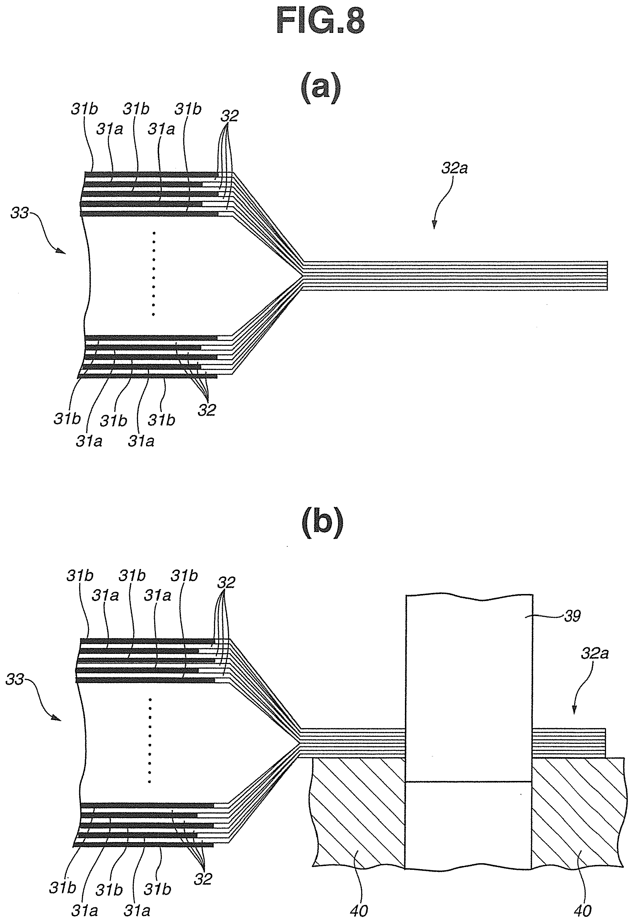

In the following, a method of producing the battery 100 will be described. First, by stacking the positive and negative electrode layers 31a and 31b while putting therebetween the separator layers 32, an electrode stacked body 33 is produced. The electrode stacked body 33 may be a combination between one positive electrode layer 31a, one negative electrode layer 31b and one separator layer 32 or a combination between a plurality of positive and negative electrode layers 31a and 31b and two or more separator layers 32. And the separator layers 32 have at a part of outer surface thereof a non-covered portion 32a that is not covered with the positive and negative electrode layers 31a and 31b. One example is shown in Fig. 6 in which the non-covered portion 32a is a projected part that extends outward from the rectangular electrode layers 31a and 31b. At a side opposite to the non-covered portion 32a when viewed planarly, each positive electrode layer 31a is electrically connected to the positive terminal 35a and each negative electrode layer 31bg is electrically connected to the negative terminal 35b. And, the non-covered portion 32a of the electrode stacked body 33 is formed with through bores 36. As is seen in Fig. 8(a), a plurality of separator layers 32 are stacked at the non-covered portion 32a, and as is seen from Fig. 8(b), by using a punch 39 and a die 40, the through bore 36 is instantly formed in the plurality of separator layers 32. In case where the electrode stacked body 33 is of a type that includes a plurality of separator layers 32, a modification may be employed in which only one of the plurality of separator layers 32 extends outward from the positive and negative electrode layers 31a and 31b so as to cause the non-covered portion 32a to have only one separator layer 32.

As is seen from Fig. 7, front and rear surfaces of the electrode stacked body 33 that has the positive and negative terminals 35a and 35b connected thereto and has at the non-covered portion 32a the through bores 36 are covered by a pair of laminate films 34a. Then, with usage of heat joining method or ultrasonic welding method, the laminate films 34a are joined at the outward extending portion 37 except an area where a liquid pouring port is produced. Furthermore, the laminate films 34a are brought into direct contact with each other in the through bores 36 of the non-covered portion 32a and subjected to the heat joining. As one example, the laminate films 34a are joined to each other by contacting an elongate heater, which thinner than the through bores 36, to a desired portion from the outside. Then, electrolyte (not shown) is poured into the package from the liquid pouring port and finally a last sealing side is heat joined. If desired, the heat joining between the laminate films 34a may be made after the electrolyte is poured into the package.

In the method of this embodiment, the forming of the through bores 36 can be made through one action and thus, work efficiency is quite high and reduction of manufacturing cost is expected.

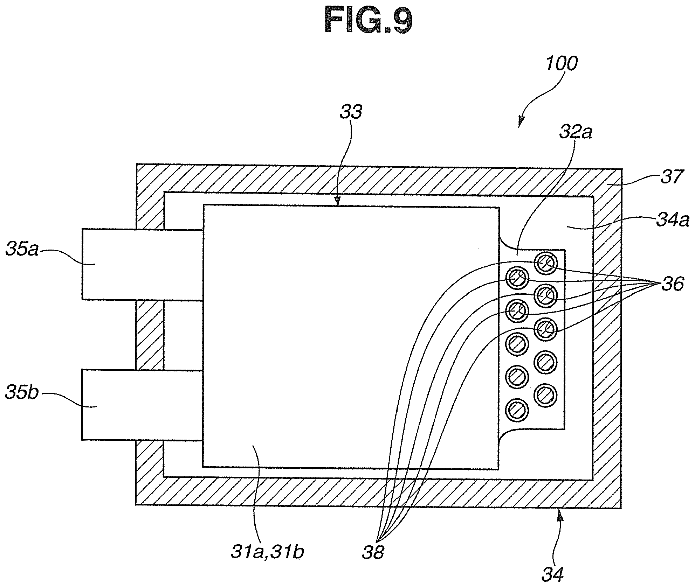

In a fifth embodiment shown in Fig. 9, a plurality of through bores 36 and a plurality of heat joined portions 38 for fixing separator layers, which are arranged in zigzag forming two rows. Accordingly, the non-covered portion 32a has a larger area than that of the fourth embodiment. In the arrangement of the fifth embodiment, due to increase in number of the heat joined portions 38 for fixing separator layers, the effect of suppressing undesirable movement and displacement of the electrode stacked body 33 is much increased. Furthermore, even if the separator layers 32 placed between adjacent two of the heat joined portions 38 for fixing separator layers in one of the two rows is applied with a force in a direction parallel in a direction in which the positive and negative terminals 35a and 35b extend, the heat joined portions 38 for fixing separator layers in the other of the two rows resist the force, and thus, the electrode stacked body 33 can be more tightly fixed. Also in this embodiment, the plural through bores 36 and the heat joined portions 38 for fixing separator layers are placed at a side opposite to a side where the positive and negative terminals 35a and 35b project outward and arranged in a direction perpendicular to a direction in which the positive and negative terminals 35a and 35b extend, and thus, undesirable movement and displacement of the electrode stacked body 33 are hardly induced. If desired, the through bores 36 and the heat joined portions 38 for fixing separator layers may be arranged to form three or more rows.

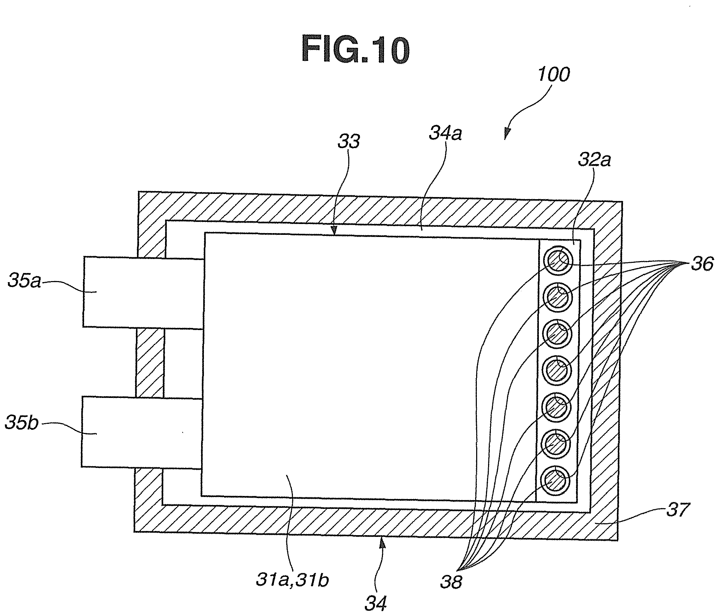

In a sixth embodiment shown in Fig. 10, the positive electrode layers 31a and the negative electrode layers 31b are rectangular and flat in shape, the separator layers 32 are rectangular and flat in shape and one size larger than the positive and negative electrode layers 31a and 31b, and the separator layers 32 project more outward than the positive and negative electrode layers 31a and 31b at a side (right side in Fig. 9) opposite to a side (left side in Fig. 9) where the positive and negative terminals 35a and 35b project outward from the electrode stacked body 33. The projected portions constitute the non-covered portion 32a, and a plurality of through bores 36 and a plurality of heat joined portions 38 for fixing separator layers are formed in the non-covered portion 32a in a manner to form one row throughout entire length of the separator layers 32. Also in this embodiment, the plural through bores 36 and the heat joined portions 38 for fixing separator layers are placed at a side opposite to a side where the positive and negative terminals 35a and 35b project and arranged in a direction perpendicular to a direction in which the positive and negative terminals 35a and 35b extend, and thus, undesirable movement and displacement of the electrode stacked body 33 are hardly induced. Furthermore, in this embodiment, the electrode stacked body 33 can have a flat shape and the battery 100 can be shaped rectangular and flat in shape, so that storing, handling and placing can be easily made.

The portion where the separator layers 32 project from the positive and negative electrode layers 31a and 31b, which is the non-covered portion 32a, may be placed at any side of the separator layers 32 which is rectangular in shape when viewed planarly. Furthermore, the non-covered portion 32a may be placed at two or more sides of the separator layers 32.

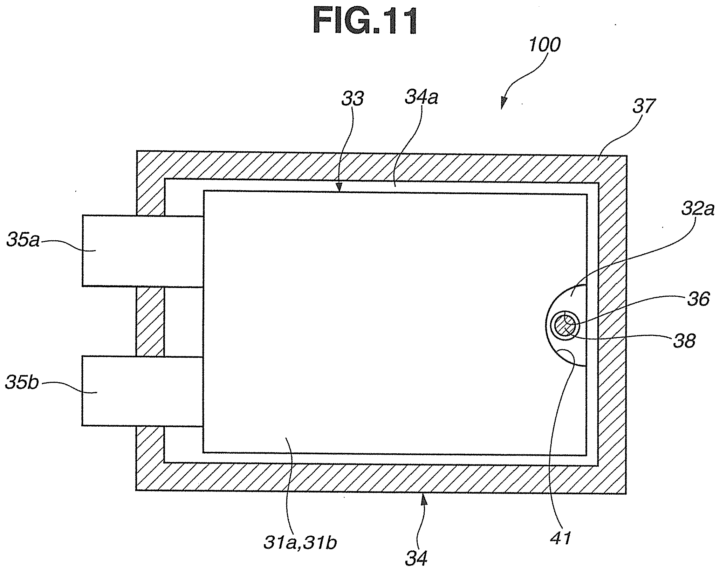

In a seventh embodiment shown in Fig. 11, the separator layers 32 are rectangular and flat in shape, and a part of peripheral portions of the positive and negative electrode layers 31a and 31b is drawn back into a rectangular shape that the flat and rectangular separator layers 32 form. That is, the separator layers 32 face to the backwardly brought part of the peripheral portions of the positive and negative electrode layers 31a and 31b, and the part to which the separator layers 32 face constitutes the non-covered portion 32a that is not covered with the positive and negative electrode layers 31a and 31b. The non-covered portion 32a is formed with a through bore 36 through which the laminate films 34a are brought into contact to each other and heat joined to each other. Like in case of the fifth embodiment, in this sixth embodiment, since the electrode stacked body 33 and the battery 100 are made flat and rectangular in shape, storing, handling and placing can be easily made. Furthermore, a space efficiency is high and thus downsizing is easily made. Furthermore, since the part of the positive and negative electrode layers 31a and 31b, which part is drawn back into the rectangular shape that the flat and rectangular separator layers 32 form, has a curved (or semicircular) outline 41, possibility of damaging inner surfaces of the laminate films 34a is low.

In a modification of this embodiment, the part of the positive and negative electrode layers 31a and 31b, which part is drawn back into the rectangular shape that the flat and rectangular separator layers 32 form, may comprise two portions that are provided at mutually facing portions of the positive and negative electrode layers 31a and 31b or four portions that are provided at all of four sides of the electrodes 31.

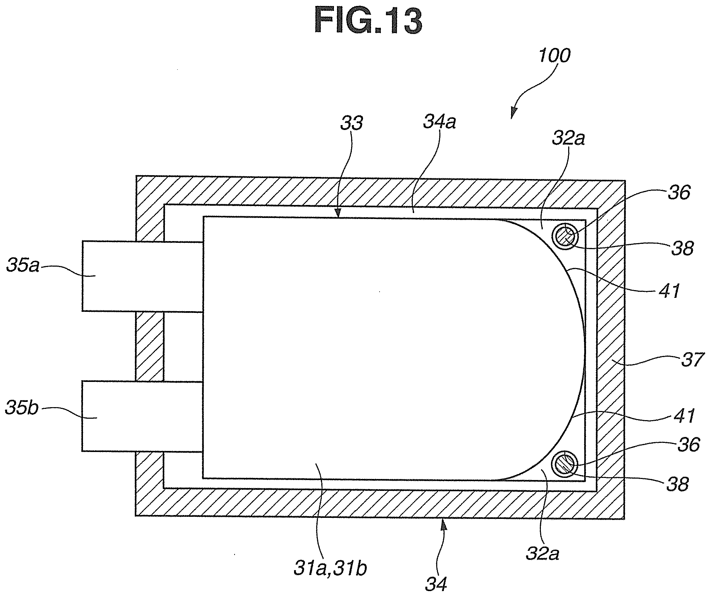

In an eighth embodiment shown in Fig. 12, two heat joined portions 38 for fixing separator layers are provided at mutually opposed sides not at one side. In this case, the electrode stacked body 33 is fixed at both sides, and thus, undesirable movement and displacement of the electrode stacked body 33 which would be induced when a force is applied in an up-and-down direction in Fig. 13 is effectively suppressed.

In a ninth embodiment shown in Fig. 13, the separator layers 32 are rectangular and flat in shape and the positive and negative electrode layers 31a and 31b are generally rectangular in shape and have each two corners chamfered and thus drawn back. With this, at a range outside the electrodes, there is provided mutually facing portions of the separator layers 32 which constitute the non-covered portion 32a. The non-covered portion 32a is formed with through bores 36, and the laminate films 34a are brought into contact to each other through the through bores 36 and heat joined to each other. Also in this embodiment, at both ends of a side opposite to a side where the positive and negative terminals 35a and 35b project to the outside of the electrode stacked body 33, there are provided through bores 36 and heat joined portions 38 for fixing separator layers and these portions 36 and 38 are arranged to form a row in a direction perpendicular a direction in which the positive and negative terminals 35a and 35b project. Thus, undesirable movement and displacement of the electrode stacked body 33 are hardly induced. Furthermore, in this embodiment, by making the electrode stacked body 33 and the battery 100 flat and rectangular in shape, storing, handling and placing can be easily made. Furthermore, a space efficiency is high and thus downsizing is easily made. Furthermore, since the part of the positive and negative electrode layers 31a and 31b, which part is drawn back into the rectangular shape that the flat and rectangular separator layers 32 form, has a curved (or semicircular) outline 41, possibility of damaging inner surfaces of the laminate films 34a is low.

In a modification of this embodiment, the positive and negative electrode layers 31a and 31b are rectangular and flat in shape, and at two of four corners of the positive and negative electrode layers 31a and 31b, the separator layers 32 project outward from the rectangular shape that the positive and negative electrode layers 31a and 31b form. By suitably carrying out judgment as to which is advantageous between a case in which the positive and negative electrode layers 31a and 31b are formed rectangular and flat and another case in which the separator layers 32 is formed rectangular and flat, adoption/rejection of the modification is determined.

A modification may be provided by combining the seventh embodiment and ninth embodiment. In this modification, one side of the positive and negative electrode layers 31a and 31b has at a center portion thereof a part that, like in the seventh embodiment, is drawn back into a rectangular shape that the flat and rectangular separator layers 32 form, and at a side opposed to the side, like in the ninth embodiment, there are formed portions of two corners drawn into a rectangular shape that the flat and rectangular separator layers 32 form. In this modification, there are provided three non-covered portions 32a in total which are one portion placed at the center of one side and two portions placed at both ends of the other side, and each of the non-covered portions 32a is formed with one through bore 36 and one heat joined portion 38 for fixing separator layers. Under this construction, due to fixing by three points, the effect of suppressing undesirable movement and displacement of the electrode stacked body 33 is increased.

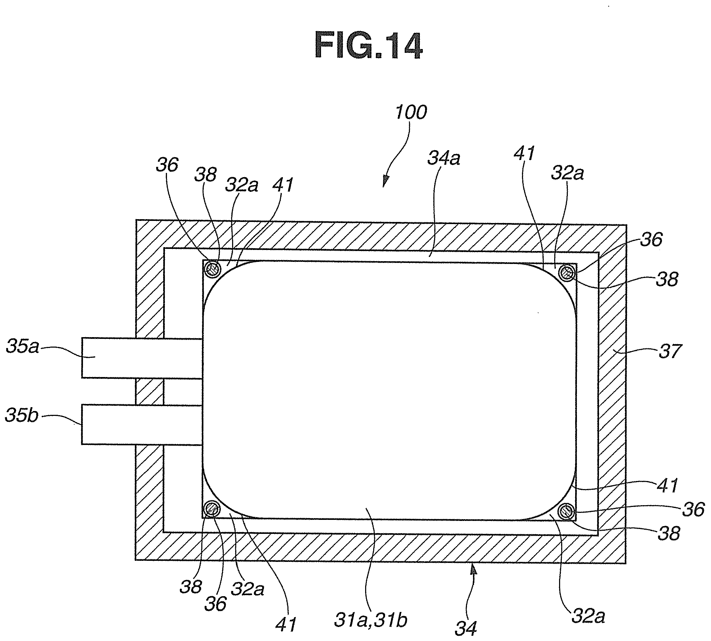

In a tenth embodiment shown in Fig. 14, the separator layers 32 are rectangular and flat in shape, and the positive and negative electrode layers 31a and 31b have, at the four corners of the rectangular separator layers 32, portions drawn into the rectangular shape that the separator layers 32 form. In this embodiment, in addition to the advantages described in the above-mentioned ninth embodiment, another advantage is obtained in which the electrode stacked body 33 can much more strongly fixed due to provision of the four heat joined portions 38 for fixing separator layers.

Furthermore, in the ninth and tenth embodiments and their modifications, the shape of the portion or portions (not shown) of the positive and negative electrode layers 31a and 31b, which are drawn into the rectangular shape that the separator layers 32 form, may be triangular in shape not curved (or semicircular) outline 41, the triangular being provided by linearly cutting each corner of the layers 31a and 31b.

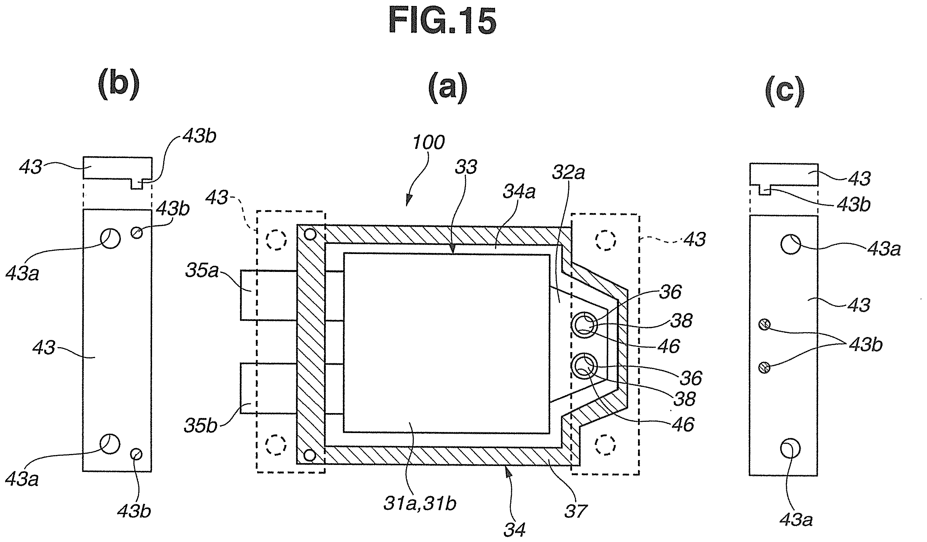

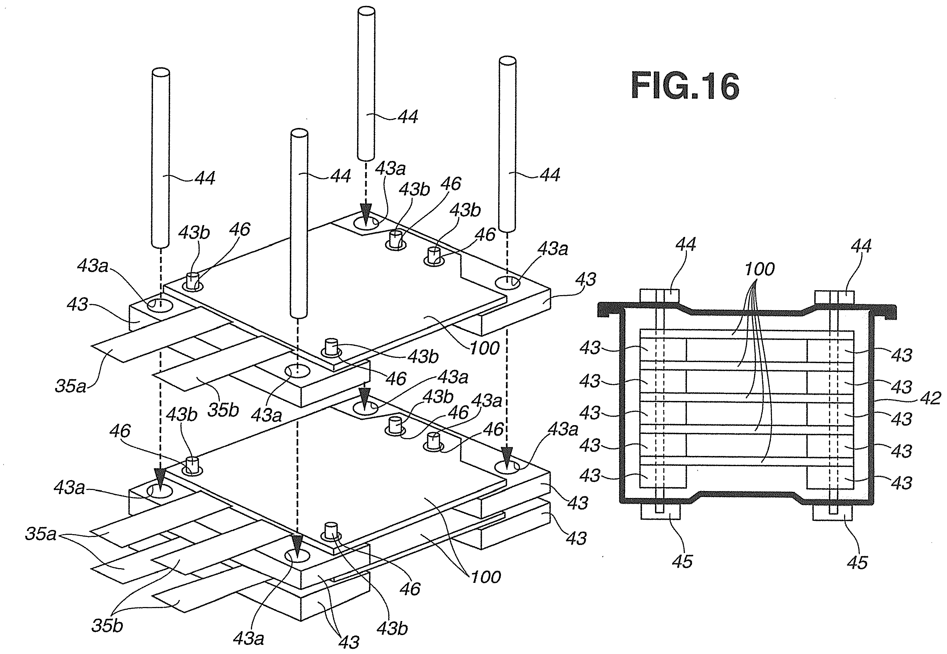

Figs. 15 and 16 show a battery module that includes the battery 100 of an eleventh embodiment of the present invention. This battery module has such a construction as to include a plurality of batteries 100 that are stacked. As is seen from Fig. 16(b), the battery module comprises a module case or housing 42 that houses therein the plurality of batteries 100, a plurality of battery holders 43 that hold the batteries 100 in the module case 42, positioning bolts 44 that position the stacked batteries 100 by passing through positioning holes possessed by the stacked batteries 100 and nuts 45 that are engaged with the positioning bolts 44 that pass through the module case 42.

Like in case of the above-mentioned embodiments, in the battery 100 of this embodiment, through bores 36 are formed in a non-covered portion 32a of the separator layers 32, and the interior of each through bore 36 provides a heat joined portion 38 for fixing separator layers. Furthermore, in this embodiment, there are further provided openings 46 that extend through the heat joined portion 38. Furthermore, at a side (the side to which the positive and negative terminals 35a and 35b are connected) where the non-covered portion 32a is not provided, there are provided openings 46 at a peripheral portion 37. The batteries 100 are respectively placed on the battery holders 43 having pins 43b of the battery holders 43 received in the openings 46.

In this embodiment, each battery 100 is held by two battery holders 43 positioned at both sides of the battery. As is mentioned hereinabove, in this embodiment, positioning of the battery 100 to the battery holder 43 is made by receiving the pins 43b of the battery holder 43 in the openings 46 of the battery 100. Each positioning bolt 44 passes through positioning openings 43a respectively formed in the plural battery holders 43. Keeping a condition in which the plural battery holders 43 are piled assuring each battery holder to precisely hold the associated battery 100 due to engagement between the pins 43b and openings 46, the positioning bolts 44 are inserted into the positioning bores 43a respectively provided by the battery holders 43. With this process, each battery case 43 can be precisely held in the module case 42 and thus each battery 100 can be precisely held. Furthermore, since, as is mentioned hereinabove in each embodiment, undesirable movement and displacement of the electrode stacked body 33 including the positive and negative electrode layers 31a and 31b in each battery 100 is suppressed, undesirable movement and displacement of the electrode stacked bodies 33 of the plural batteries 100 are suppressed in a lump.

In this embodiment, since the openings 46 used for positioning the batteries 100 are formed at the heat joined portions (particularly, heat-joined portions 38 for fixing separator layers) of the laminate films 34a, there is no need of providing other positioning bores separately, and thus space efficiency is increased and downsizing is easily made. Furthermore, due to insertion of the pins 43b of the battery holders 43 into the openings 46, the battery holders 43 directly contribute to prevention of undesirable movement of the electrode stacked body 33. This is because the openings 46 are so positioned as to contribute to not only fixing the film-made cover members (exterior body films) 34 of the batteries 100 but also fixing the separator layers 32 of the batteries.

The battery 100 used in this embodiment may be of the types of the above-mentioned fourth to tenth embodiments and their modifications with such an additional treatment that openings 46 are formed in the heat-joined portion 38 for fixing separator layers. If desired, also the outward extending portion 37 may be formed with openings as necessary. The arrangement of the non-covered potion 32a, the through bore or bores 36 and the heat-joined portion or portions 38 for fixing separator layers may be the same as that of the above-mentioned fourth to tenth embodiments and their modifications.

The fourth to tenth embodiments of the invention are not limited to those mentioned hereinabove. The electrode stacked body may be of a wound type or folded type. The film-made cover member may of a type that is produced by folding one laminate film to form a double-layered film and heat joining three sides of the double-layered film. In order to suppress undesirable movement of the electrode stacked body 33, it is only necessary to provide at least one side of the electrode stacked body 33 with the non-covered portion 32a with the through bore or bores 36. However, for much effective suppression, the above-mentioned embodiments show examples in which the positive and negative terminals 35a and 35b and the through bore or bores 36 are placed at mutually opposed sides of the electrode stacked body 33 respectively and examples in which the through bores 36 are placed at both the mutually opposed sides of the electrode stacked body 33.

## Claims

1. A battery (A, 100) comprising:
an electrode stacked body (3) that includes a plurality of electrodes (1) and a plurality of separators (2) that are alternately stacked; and
a film-made cover member (4) that, by joining mutually overlapped peripheral portions of films, constitute a package for hermetically receiving therein the electrode stacked body,
in which the plurality of separators (2) include separators (2B) that are flat in shape and smaller in size, which is a size larger than the plurality of electrodes (1), and separators (2A) that are flat in shape and larger in size, which means a length in longitudinal direction is longer than the length of the plurality of electrodes (1) and the separators (2B) that are flat in shape and smaller in size, and the separators that are flat in shape and larger in size project outward from a side of the electrode stacked body (3) and joined to the films of the film-made cover member (4) at a position inside the mutually joined peripheral portions of the film-made cover member (4).

2. A battery (A, 100) as claimed in Claim 1, in which the plurality of separators (2A) that are flat in shape and larger in size and the plurality of separators (2B) that are flat in shape and smaller in size are alternately put on one another in a direction in which the separators (2) are stacked.

3. A battery (A, 100) as claimed in Claim 1 or 2, in which the peripheral portions of the films of the film-made cover member (4) are heat joined to each other and the separators (2A) that are flat in shape and larger in size are bonded to the films of the film-made cover member (4) through a ultrasonic welding method.

4. A battery (A, 100) as claimed in either one of Claims 1 to 3, in which adjacent two of the separators (2) are at least partially joined at at least one side and one of a positive electrode (1A) or a negative electrode (1B) is put between the two separators (2) that are joined.

5. A battery unit including a battery (A, 100) as defined by either one of Claims 1 to 4, comprising:
a plurality of the batteries (A, 100) that are stacked; and
a housing (42) that houses therein the batteries (A, 100) while pressing the batteries (A, 100) in a direction in which the batteries(A, 100) are stacked.

6. A method of producing a battery (A, 100) comprising:
a step of wrapping up an electrode stacked body with a film-made cover member (4), the electrode stacked body (3) comprising a plurality of separators (2), which include separators (2B) that are flat in shape and smaller in size which is a size larger than the plurality of electrodes (1), and separators (2A) that are flat in shape and larger in size, which means a length in longitudinal direction is longer than the length of the plurality of electrodes (1) and the separators (2B) that are flat in shape and smaller in size, and a plurality of electrodes (1 A, 1 B) that are alternately stacked with the separators (2);
a step of producing a package for hermetically receiving therein the electrode stacked body (3) by joining peripheral portions of the films of the film-made cover member (4) that covers the electrode stacked body (3); and
a step of, after joining the peripheral portions of the films of the film-made cover member (4), joining the separators (2A) that are flat in shape and larger in size to the films of the film-made cover member (4) at a side of the electrode stacked body (3) inside the joined peripheral portions of the film-made cover member (4).

7. A method of producing a battery (A, 100) as claimed in Claim 6, in which the step of producing the package for hermetically receiving therein the electrode stacked body (3) includes a step of heat joining the peripheral portions of the films of the film-made cover member (4), and the step of joining the separators (2A) that are flat in shape and larger in size to the films of the film-made cover member includes a step of joining the separators (2A) that are flat in shape and larger in size to the films of the film-made cover member (4) through ultrasonic welding method.

8. A battery (A, 100) comprising:
an electrode stacked body (3) including separator layers (32) and positive and negative electrode layers (31 a, 31 b) that are alternately put on one another putting therebetween the separator layers (32); and
a cover member (34) that covers the electrode stacked body (3),
in which:
the separator layers (32) have at a part of the peripheral portions of the separator layers (32) a non-covered portion that is not covered by the positive and negative electrode layers (31 a, 31 b), the non-covered portion being formed with a through bore (36); and
the cover member (34) includes a pair of laminate films (34a) or one laminate film (34a) that is folded, the film (34a) containing a heat fusible resin and a metal layer, and the paired laminate films (34a) or two sections produced by folding the one film (34a) are heat joined to each other through the through bore (36) of the non-covered portion of the separator layers (32).

9. A battery (A, 100) as claimed in Claim 8, in which the positive and negative electrode layers (31 a, 31 b) are flat and rectangular in shape, and the non-covered portion of the separator layers (32) is a portion that projects outward when viewed planarly from a rectangular shape that the positive and negative electrode layers (31 a, 31 b) form.

10. A battery (A, 100) as claimed in Claim 8, in which the separator layers (32) are flat and rectangular in shape and the non-covered portion of the separator layers (32) is so shaped that the positive and negative electrode layers (31 a, 31 b) are drawn back into a rectangular shape that the separator layers (32) form.

11. A battery (A, 100) as claimed in Claim 10, in which the non-covered portion of the separator layers (32) is placed at least one of the corners of the separators (32) that are flat and rectangular in shape.

12. A battery (A, 100) as claimed in Claim 10 or 11, in which the portion provided when the positive and negative electrode layers (31 a, 31 b) are drawn back into the rectangular shape that the separator layers (32) form has a curved outline.

13. A battery (A, 100) as claimed in either one of Claims 8 to 12, further comprising:
terminals (35a, 35b) that are connected to the positive and negative electrode layers (31 a, 31 b) and passed through the cover member (34) to be exposed to the outside; and
wherein the non-covered portion is placed at a side of the separator layers (32) that is opposite to a side where the terminals (35a, 35b) project into the outside.

14. A battery (A, 100) as claimed in Claim 13, in which the through bore (36) is one of through bores (36) which are aligned in a direction perpendicular to a direction in which the terminals (35a, 35b) project.

15. A battery (A, 100) as claimed in either one of Claims 8 to 14, in which the laminate films (34a) that are heat joined to each other through the through bore (36) are formed with a bore that extends through the heat joined portion.

16. A battery module comprising:
a plurality of batteries (A, 100) each being defined by Claim 15;
openings (46) formed in the heat joined portions of the batteries (A, 100); and
battery holders (43) each having pins (43b),
wherein the batteries (A, 100) and the battery holders (43) are alternately put on one another having the pins (43b) inserted into the openings (46).

17. A method of producing a battery (A, 100), comprising:
a step of producing an electrode stacked body (3) by alternately stacking positive and negative electrode layers (31 a, 31 b) having separator layers (32) put therebetween;
a step of forming a through bore (36) in a non-covered portion that is a part of outer peripheral portions of the separator layers (32) in the electrode stacked body (3), the part being not covered with the positive and negative electrode layers (31 a, 31 b);
a step of, after forming the through bore (36), wrapping up the electrode stacked body (3) with a pair of laminate films (34a) or a folded laminate film (34a); and
a step of heat joining respective parts of the laminate films (34a) that are put in the through bore (36).

18. A method of producing a battery (A, 100), as claimed in Claim 17, in which:
the step of producing the electrode stacked body (3) is a step of joining a plurality of positive electrode layers (31 a), a plurality of negative electrode layers (31 b) and two or more separator layers (32) on top of one another; and
the step of forming the through bore (36) is a step of forming the through bore (36) in the non-covered portion of the two or more separator layers (32) at once.

19. A battery (A, 100) as claimed in Claim 1, in which a space is provided between the position where the separators (2A) that are flat in shape and larger in size are joined to the films of the film-made cover member (4) and a position where the peripheral portions of the films of the film-made cover member (4) are joined to each other.

20. A battery (A, 100) as claimed in Claim 19, in which each electrode (1) is sandwiched between adjacent two of the separators (2), the separators (2A) that are flat in shape and larger in size are arranged at equally spaced intervals in a lamination direction of the electrode stacked body (3) and peripheral portions of outermost two of the separators (2A) that are flat in shape and larger in size are joined to each other.

## Patentansprüche

1. Batterie (A, 100), umfassend:
einen Elektrodenstapelkörper (3), der eine Vielzahl von Elektroden (1) und eine Vielzahl von abwechselnd gestapelten Separatoren (2) aufweist; und
ein Folien-Abdeckelement (4), das durch Zusammenfügen von gegenseitig überlappten Umfangsbereichen von Folien eine Verpackung zum hermetischen Aufnehmen des Elektrodenstapelkörpers bildet,
wobei die Vielzahl der Separatoren (2) Separatoren (2B), die eine flache Form und kleinere Größe aufweisen, die größer als die der Mehrzahl der Elektroden (1) ist, und Separatoren (2A) umfasst, die eine flache Form und eine größere Größe aufweisen, was bedeutet, dass eine Länge in Längsrichtung länger ist als die Länge der Vielzahl von Elektroden (1) und der Separatoren (2B) ist, die eine flache Form und kleinere Größe aufweisen, und die Separatoren (2B), die eine flache Form und eine größere Größe aufweisen, von einer Seite des Elektrodenstapelkörpers (3) nach außen vorstehen und mit den Folien des Folien-Abdeckelements (4) an einer Position innerhalb der miteinander verbundenen Umfangsbereichen des Folien-Abdeckelements (4) verbunden sind.

2. Batterie (A, 100) nach Anspruch 1, wobei die Vielzahl der Separatoren (2A), die eine flache Form und größere Größe aufweisen, und die Vielzahl der Separatoren (2B), die eine flache Form und kleinere Größe aufweisen, abwechselnd in einer Richtung aufeinander gelegt sind, in der die Separatoren (2) gestapelt sind.

3. Batterie (A, 100) nach Anspruch 1 oder 2, bei der die Umfangsbereiche der Folien des Folien-Abdeckelements (4) mittels Wärme miteinander verbunden sind und die Separatoren (2A), die eine flache Form und größere Größe aufweisen, mit den Folien des Folien-Abdeckelements (4) durch ein Ultraschall-Schweißverfahrenen verbunden sind.

4. Batterie (A, 100) nach einem der Ansprüche 1 bis 3, wobei zwei benachbarte Separatoren (2) zumindest teilweise mit zumindest einer Seite verbunden sind und eine positive Elektrode (1A) oder eine negative Elektrode (1B) zwischen die beiden Separatoren (2), die verbunden sind, gelegt ist.

5. Batterieeinheit einer Batterie (A, 100) nach einem der Ansprüche 1 bis 4, umfassend:
eine Vielzahl der Batterien (A, 100), die gestapelt sind; und
ein Gehäuse (42), das die Batterien (A, 100) darin aufnimmt, wobei die Batterien (A, 100) in eine Richtung gedrückt sind, in der die Batterien (A, 100) gestapelt sind.

6. Verfahren zum Herstellen einer Batterie (A, 100), umfassend:
einen Schritt des Umwickelns eines Elektrodenstapelkörpers mit einem Folien-Abdeckelement (4), wobei der Elektrodenstapelkörper (3) eine Vielzahl von Separatoren (2) aufweist, die Separatoren (2B) umfassen, die eine flache Form und eine kleinere Größe aufweisen, die größer als die der Mehrzahl von Elektroden (1) und Separatoren (2A) ist, die eine flache Form und größere Größe aufweisen, was bedeutet, dass eine Länge in Längsrichtung länger als die Länge der Vielzahl von Elektroden (1) und der Separatoren (2B), die eine flache Form und kleinere Größe aufweisen, und einer Vielzahl von Elektroden (1A, 1B) ist, die abwechselnd mit den Separatoren (2) gestapelt sind;
einen Schritt des Herstellens einer Verpackung zum hermetischen Aufnehmen des Elektrodenstapelkörpers (3) darin durch Verbinden von Umfangsbereichen der Folien des Folien-Abdeckelements (4), das den Elektrodenstapelkörper (3) abdeckt; und
nach dem Verbinden der Umfangsbereiche der Folien des Folien-Abdeckelements (4), einen Schritt des Verbindens der Separatoren (2A), die eine flache Form und größere Größe aufweisen, mit den Folien des Folien-Abdeckelements (4) an einer Seite des Elektrodenstapelkörpers (3) innerhalb der verbundenen Umfangsbereiche des Folien-Abdeckelements (4).

7. Verfahren zum Herstellen einer Batterie nach Anspruch 6, wobei der Schritt des Herstellens der Verpackung zum hermetischen Aufnehmen des Elektrodenstapelkörpers (3) einen Schritt des Verbindens mittels Wärme der Umfangsabschnitte der Folien des Folien-Abdeckelements (4) umfasst, und der Schritt des Verbindens der Separatoren (2A), die eine flache Form und größere Größe aufweisen, mit den Folien des Folien-Abdeckelements einen Schritt des Verbindens der Separatoren (2A), die eine flache Form und größere Größe aufweisen, mit den Folien des Folien-Abdeckelements (4) durch ein Ultraschall-Schweißverfahren umfasst.

8. Batterie (A 100), umfassend:
einen Elektrodenstapelkörper (3), der Separatorschichten (32) und positive und negative Elektrodenschichten (31a, 31b) umfasst, die abwechselnd mit den dazwischen liegenden Separatorschichten (32) aufeinander gelegt sind; und
ein Abdeckelement (34), das den Elektrodenstapelkörper (3) abdeckt,
wobei:
die Separatorschichten (32) an einem Teil der Umfangsbereiche der Separatorschichten (32) einen nicht abgedeckten Bereich aufweisen, der nicht hat von den positiven und negativen Elektrodenschichten (31a, 31b) abgedeckt ist, wobei der nicht abgedeckte Bereich mit einer Durchgangsbohrung (36) ausgebildet ist; und
das Abdeckelement (34) ein Paar von Laminatfolien (34a) oder eine Laminatfolie (34a), die gefaltet ist, umfasst, wobei die Folie (34a) ein wärmeschmelzbares Harz und eine Metallschicht enthält, und die paarweise angeordneten Laminatfolien (34a) oder zwei durch Falten der einen Folie (34a) erzeugte Abschnitte miteinander durch die Durchgangsbohrung (36) des nicht abgedeckten Bereichs der Separatorschichten (32) mittels Wärme miteinander verbunden sind.

9. Batterie (A, 100) nach Anspruch 8, wobei die positiven und negativen Elektrodenschichten (31a, 31b) flach und rechteckig ausgebildet sind und der nicht abgedeckte Bereich der Separatorschichten (32) ein Bereich ist, der planar aus einer rechteckigen Form gesehen, welche die positiven und negativen Elektrodenschichten (31a, 31b) bildet, nach außen vorsteht.

10. Batterie (A, 100) nach Anspruch 8, wobei die Separatorschichten (32) flach und rechteckig ausgebildet sind und der nicht abgedeckte Bereich der Separatorschichten (32) so geformt ist, dass die positiven und negativen Elektrodenschichten (31a, 31b) in eine rechteckige Form zurückgezogen sind, welche die Trennschichten (32) bilden.

11. Batterie (A, 100) nach Anspruch 10, wobei der nicht abgedeckte Bereich der Separatorschichten (32) an zumindest einer der Ecken der Separatoren (32) platziert ist, die flach und rechteckig ausgebildet sind.

12. Batterie (A, 100) nach Anspruch 10 oder 11, wobei der Bereich, der vorgesehen ist, wenn die positiven und negativen Elektrodenschichten (31a, 31b) in die rechteckige Form zurückgezogen sind, welche die Separatorschichten (32) bilden, eine gekrümmte Kontur aufweist.

13. Batterie nach einem der Ansprüche 8 bis 12, ferner umfassend:
Anschlüsse (35a, 35b), die mit den positiven und negativen Elektrodenschichten (31a, 31b) verbunden sind und durch das Abdeckelement (34) zum Freiliegen nach außen geführt sind; und
wobei der nicht abgedeckte Bereich an einer Seite der Separatorschichten (32) platziert ist, der einer Seite gegenüberliegt, an der die Anschlüsse (35a, 35b) nach außen vorragen.

14. Batterie (A, 100) nach Anspruch 13, wobei die Durchgangsbohrung (36) eine der Durchgangsbohrungen (36) ist, die in eine Richtung senkrecht zu einer Richtung fluchten, in welche die Anschlüsse (35a, 35b) vorragen.

15. Batterie (A, 100) nach einem der Ansprüche 8 bis 14, wobei die Laminatfolien (34a), die mittels Wärme durch die Durchgangsbohrung (36) miteinander verbunden sind, mit einer Bohrung ausgebildet sind, die sich durch den mittels Wärme verbundenen Bereich erstreckt.

16. Batteriemodul, umfassend:
eine Vielzahl von Batterien (A, 100), die jeweils nach Anspruch 15 definiert sind;
Öffnungen (46), die in den mittels Wärme verbundenen Bereichen der Batterien (A, 100) ausgebildet sind; und
Batteriehalterungen (43), die jeweils Stifte (43b) aufweisen,
wobei die Batterien (A, 100) und die Batteriehalterungen (43) abwechselnd mit den in die Öffnungen (46) eingesetzten Stiften (43b) aufeinandergelegt sind.

17. Verfahren zum Herstellen einer Batterie (A, 100), umfassend:
einen Schritt des Herstellens eines Elektrodenstapelkörpers (3) durch abwechselndes Stapeln von positiven und negativen Elektrodenschichten (31a, 31b) mit dazwischen gelegten Separatorschichten (32);
einen Schritt des Ausbildens einer Durchgangsbohrung (36) in einem nicht abgedeckten Bereich, der einen Teil der Außenumfangsbereiche der Separatorschichten (32) im Elektrodenstapelkörper (3) bildet, wobei der Teil nicht mit den positiven und negativen Elektrodenschichten (31a, 31b) abgedeckt ist;
nach dem Ausbilden der Durchgangsbohrung (36) einen Schritt des Umwickelns des Elektrodenstapelkörpers (3) mit einem Paar von Laminatfolien (34a) oder einer gefalteten Laminatfolie (34a); und
einen Schritt des Verbindens mittels Wärme von jeweiligen Teilen der Laminatfolien (34a), die in die Durchgangsbohrung (36) gelegt sind.

18. Verfahren zum Herstellen einer Batterie (A, 100) nach Anspruch 17, wobei:
der Schritt des Herstellens des Elektrodenstapelkörpers (3) ein Schritt des Verbindens einer Vielzahl von positiven Elektrodenschichten (31a), einer Vielzahl von negativen Elektrodenschichten (31b) und zwei oder mehrerer Separatorschichten (32) übereinander ist; und
der Schritt des Ausbildens der Durchgangsbohrung (36) ein Schritt des Ausbildens der Durchgangsbohrung (36) im nicht abgedeckten Bereich der zwei oder mehr Separatorschichten (32) auf einmal ist.

19. Batterie (A, 100) nach Anspruch 1, wobei ein Zwischenraum zwischen der Position, an der die Separatoren (2A), die eine flache Form und größere Größe aufweisen, mit den Folien des Folien-Abdeckelements (4) verbunden sind, und einer Position vorgesehen ist, an der die Umfangsbereiche der Folien des Folien-Abdeckelements (4) miteinander verbunden sind.

20. Batterie (A, 100) nach Anspruch 19, wobei jede Elektrode (1) zwischen zwei benachbarten Separatoren (2) angeordnet ist, die Separatoren (2A, die eine flache Form und größere Größe aufweisen, in gleich beabstandeten Intervallen in Laminierrichtung des Elektrodenstapelkörpers (3) angeordnet sind, und Umfangsbereiche der beiden äußersten Separatoren (2A), die eine flache Form und größere Größe aufweisen, miteinander verbunden sind.

## Revendications

1. Batterie (A, 100) comprenant :
un corps empilé d'électrodes (3) qui comporte une pluralité d'électrodes (1) et une pluralité de séparateurs (2) qui sont empilés de manière alternée ; et
un élément de couverture réalisé en film (4) qui, en assemblant des parties périphériques mutuellement chevauchées de films, constitue un emballage pour recevoir hermétiquement dedans le corps empilé d'électrodes,
dans laquelle la pluralité de séparateurs (2) comportent des séparateurs (2B) qui sont de forme plate et de plus petite taille, qui est une taille supérieure à celle de la pluralité d'électrodes (1), et des séparateurs (2A) qui sont de forme plate et de plus grande taille, ce qui signifie qu'une longueur dans une direction longitudinale est supérieure à la longueur de la pluralité d'électrodes (1) et des séparateurs (2B) qui sont de forme plate et de plus petite taille, et les séparateurs qui sont de forme plate et de plus grande taille se projettent vers l'extérieur à partir d'un côté du corps empilé d'électrodes (3) et sont assemblés aux films de l'élément de couverture réalisé en film (4) à une position à l'intérieur des parties périphériques mutuellement assemblées de l'élément de couverture réalisé en film (4).

2. Batterie (A, 100) telle que revendiquée dans la revendication 1, dans laquelle la pluralité de séparateurs (2A) qui sont de forme plate et de plus grande taille et la pluralité de séparateurs (2B) qui sont de forme plate et de plus petite taille sont placés de manière alternée les uns sur les autres dans une direction dans laquelle les séparateurs (2) sont empilés.

3. Batterie (A, 100) telle que revendiquée dans la revendication 1 ou 2, dans laquelle les parties périphériques des films de l'élément de couverture réalisé en film (4) sont assemblées thermiquement entre elles et les séparateurs (2A) qui sont de forme plate et de plus grande taille sont liés aux films de l'élément de couverture réalisé en film (4) par un procédé de soudage par ultrasons.

4. Batterie (A, 100) telle que revendiquée dans l'une quelconque des revendications 1 à 3, dans laquelle deux séparateurs adjacents des séparateurs (2) sont au moins partiellement assemblés sur au moins un côté et l'une d'une électrode positive (1A) et d'une électrode négative (1B) est placée entre les deux séparateurs (2) qui sont assemblés.

5. Unité de batteries comportant une batterie (A, 100) telle que définie par l'une quelconque des revendications 1 à 4, comprenant :
une pluralité des batteries (A, 100) qui sont empilées ; et
un boîtier (42) qui reçoit dedans les batteries (A, 100) tout en appuyant sur les batteries (A, 100) dans une direction dans laquelle les batteries (A, 100) sont empilées.

6. Procédé de production d'une batterie (A, 100) comprenant :
une étape qui consiste à envelopper un corps empilé d'électrodes avec un élément de couverture réalisé en film (4), le corps empilé d'électrodes (3) comprenant une pluralité de séparateurs (2), qui comportent des séparateurs (2B) qui sont de forme plate et de plus petite taille qui est une taille supérieure à celle de la pluralité d'électrodes (1), et des séparateurs (2A) qui sont de forme plate et de plus grande taille, ce qui signifie qu'une longueur dans une direction longitudinale est supérieure à la longueur de la pluralité d'électrodes (1) et des séparateurs (2B) qui sont de forme plate et de plus petite taille, et une pluralité d'électrodes (1A, 1B) qui sont empilées de manière alternée avec les séparateurs (2) ;
une étape qui consiste à produire un emballage pour recevoir hermétiquement dedans le corps empilé d'électrodes (3) en assemblant des parties périphériques des films de l'élément de couverture réalisé en film (4) qui couvre le corps empilé d'électrodes (3) ; et
une étape qui consiste à assembler, après avoir assemblé les parties périphériques des films de l'élément de couverture réalisé en film (4), les séparateurs (2A) qui sont de forme plate et de plus grande taille aux films de l'élément de couverture réalisé en film (4) sur un côté du corps empilé d'électrodes (3) à l'intérieur des parties périphériques assemblées de l'élément de couverture réalisé en film (4).

7. Procédé de production d'une batterie (A, 100) tel que revendiqué dans la revendication 6, dans lequel l'étape de production de l'emballage pour recevoir hermétiquement dedans le corps empilé d'électrodes (3) comporte une étape qui consiste à assembler thermiquement les parties périphériques des films de l'élément de couverture réalisé en film (4), et l'étape d'assemblage des séparateurs (2A) qui sont de forme plate et de plus grande taille aux films de l'élément de couverture réalisé en film comporte une étape qui consiste à assembler les séparateurs (2A) qui sont de forme plate et de plus grande taille aux films de l'élément de couverture réalisé en film (4) par un procédé de soudage par ultrasons.

8. Batterie (A, 100) comprenant :
un corps empilé d'électrodes (3) comportant des couches de séparateurs (32) et des couches d'électrodes positives et négatives (31a, 31b) qui sont placées de manière alternée les unes sur les autres en plaçant entre elles les couches de séparateurs (32) ; et
un élément de couverture (34) qui couvre le corps empilé d'électrodes (3),
dans laquelle :
les couches de séparateurs (32) ont au niveau d'une partie des parties périphériques des couches de séparateurs (32) une partie non couverte qui n'est pas couverte par les couches d'électrodes positives et négatives (31 a, 31 b), la partie non couverte étant formée avec un alésage traversant (36) ; et
l'élément de couverture (34) comporte une paire de films stratifiés (34a) ou un film stratifié (34a) qui est plié, le film (34a) contenant une résine thermofusible et une couche de métal, et les films stratifiés appariés (34a) ou deux sections produites par pliage du film (34a) sont assemblé(e)s thermiquement l'un(e) à l'autre à travers l'alésage traversant (36) de la partie non couverte des couches de séparateurs (32).

9. Batterie (A, 100) telle que revendiquée dans la revendication 8, dans laquelle les couches d'électrodes positives et négatives (31 a, 31 b) sont de forme plate et rectangulaire, et la partie non couverte des couches de séparateurs (32) est une partie qui se projette vers l'extérieur lorsqu'elle est vue en plan à partir d'une forme rectangulaire que forment les couches d'électrodes positives et négatives (31 a, 31 b).

10. Batterie (A, 100) telle que revendiquée dans la revendication 8, dans laquelle les couches de séparateurs (32) sont de forme plate et rectangulaire et la partie non couverte des couches de séparateurs (32) est formée de sorte que les couches d'électrodes positives et négatives (31 a, 31 b) soient ramenées dans une forme rectangulaire que forment les couches de séparateurs (32).

11. Batterie (A, 100) telle que revendiquée dans la revendication 10, dans laquelle la partie non couverte des couches de séparateurs (32) est placée au niveau d'au moins l'un des coins des séparateurs (32) qui sont de forme plate et rectangulaire.

12. Batterie (A, 100) telle que revendiquée dans la revendication 10 ou 11, dans laquelle la partie fournie lorsque les couches d'électrodes positives et négatives (31 a, 31 b) sont ramenées dans la forme rectangulaire que forment les couches de séparateurs (32) a un contour incurvé.

13. Batterie (A, 100) telle que revendiquée dans l'une quelconque des revendications 8 à 12, comprenant en outre :
des bornes (35a, 35b) qui sont reliées aux couches d'électrodes positives et négatives (31 a, 31 b) et passent à travers l'élément de couverture (34) pour être exposées à l'extérieur ; et
dans laquelle la partie non couverte est placée sur un côté des couches de séparateurs (32) qui est opposé à un côté où les bornes (35a, 35b) se projettent à l'extérieur.

14. Batterie (A, 100) telle que revendiquée dans la revendication 13, dans laquelle l'alésage traversant (36) est l'un des alésages traversants (36) qui sont alignés dans une direction perpendiculaire à une direction dans laquelle les bornes (35a, 35b) se projettent.

15. Batterie (A, 100) telle que revendiquée dans l'une quelconque des revendications 8 à 14, dans laquelle les films stratifiés (34a) qui sont assemblés thermiquement l'un à l'autre à travers l'alésage traversant (36) sont formés avec un alésage qui s'étend à travers la partie assemblée thermiquement.

16. Module de batteries comprenant :
une pluralité de batteries (A, 100) chacune étant définie par la revendication 15 ;
des ouvertures (46) formées dans les parties assemblées thermiquement des batteries (A, 100) ; et
des supports de batteries (43) ayant chacun des broches (43b),
dans lequel les batteries (A, 100) et les supports de batteries (43) sont placés de manière alternée les uns sur les autres avec les broches (43b) insérées dans les ouvertures (46).

17. Procédé de production d'une batterie (A, 100), comprenant :
une étape qui consiste à produire un corps empilé d'électrodes (3) en empilant de manière alternée des couches d'électrodes positives et négatives (31 a, 31 b) ayant des couches de séparateurs (32) placées entre elles ;
une étape qui consiste à former un alésage traversant (36) dans une partie non couverte qui est une partie des parties périphériques externes des couches de séparateurs (32) dans le corps empilé d'électrodes (3), la partie n'étant pas couverte avec les couches d'électrodes positives et négatives (31 a, 31b);
une étape qui consiste à envelopper le corps empilé d'électrodes (3) avec une paire de films stratifiés (34a) ou un film stratifié plié (34a), après avoir formé l'alésage traversant (36) ; et
une étape qui consiste à assembler thermiquement des parties respectives des films stratifiés (34a) qui sont placées dans l'alésage traversant (36).

18. Procédé de production d'une batterie (A, 100) tel que revendiqué dans la revendication 17, dans lequel :
l'étape de production du corps empilé d'électrodes (3) est une étape qui consiste à assembler une pluralité de couches d'électrodes positives (31 a), une pluralité de couches d'électrodes négatives (31 b) et deux couches de séparateurs (32) ou plus les unes sur les autres ; et
l'étape de formation de l'alésage traversant (36) est une étape qui consiste à former l'alésage traversant (36) dans la partie non couverte des deux couches de séparateurs (32) ou plus à la fois.

19. Batterie (A, 100) telle que revendiquée dans la revendication 1, dans laquelle un espace est prévu entre la position où les séparateurs (2A) qui sont de forme plate et de plus grande taille sont assemblés aux films de l'élément de couverture réalisé en film (4) et une position où les parties périphériques des films de l'élément de couverture réalisé en film (4) sont assemblées entre elles.

20. Batterie (A, 100) telle que revendiquée dans la revendication 19, dans laquelle chaque électrode (1) est prise en tenaille entre deux séparateurs adjacents des séparateurs (2), les séparateurs (2A) qui sont de forme plate et de plus grande taille sont agencés à des intervalles réguliers dans une direction de stratification du corps empilé d'électrodes (3) et des parties périphériques de deux séparateurs les plus externes des séparateurs (2A) qui sont de forme plate et de plus grande taille sont assemblées entre elles.
